# EUROPÄISCHE PATENTSCHRIFT

(11) **EP 4 403 034 B1**
(45) Veröffentlichungstag und Bekanntmachung des Hinweises auf die Patenterteilung: **12.11.2025**
(21) Anmeldenummer: 24174822.7
(22) Anmeldetag: 04.06.2020
(51) Int. Cl.: A21C 13/00

(54) **VERWENDUNG EINES REGALS ZUM LAGERN VON BACKWAREN**
USE OF A SHELF FOR STORING BAKED GOODS
UTILISATION D'UNE ÉTAGÈRE POUR STOCKER DES PRODUITS DE BOULANGERIE

(30) Priorität: 23.09.2019 DE 102019006662
(43) Veröffentlichungstag der Anmeldung: 24.07.2024
(62) Teilanmeldung aus: 20178221.6
(73) Patentinhaber: Brinker, Karl, 44629 Herne Nordrhein-Westfalen (DE)
(72) Erfinder: Brinker, Karl, 44629 Herne Nordrhein-Westfalen (DE)
(74) Vertreter: Schneiders & Behrendt Bochum

(56) Entgegenhaltungen:
- EP-A2- 0 791 295
- DE-A1- 3 544 738
- FR-A1- 2 653 304

## Beschreibung

Die Erfindung betrifft die Verwendung eines Regals zum Lagern von Backwaren in übereinander angeordneten Ebenen.

Es ist bekannt, unterschiedlichste Backwaren in Regalen zu lagern, um die Backwaren danach einer Weiterverarbeitung zuzuführen.

Aufgabe der Erfindung ist es, einem Backwaren aufnehmenden Lagerregal eine weitere Verwendung zu geben.

Diese Aufgabe wird erfindungsgemäß durch ein Verfahren nach Anspruch 1 gelöst.

Hierdurch wird es möglich, im selben Teiglinge aufnehmenden Lagerregal in den jeweiligen Ebenen bzw. Etagen unterschiedliche Gärgrade bei den Teiglingen durchzuführen, die danach tiefgekühlt werden. Vom nicht gegärten grünen Teigling, über 30 und 60 Minuten Vorgären bis 120, 180 und mehr Minuten Vorgären sind alle Gärgrade im selben Regal erreichbar, und dies zur gleichen Zeit, mit exakt wiederholbaren Gärerfolgen und sogar mit Gärunterbrechungen.

Die einzelnen Ebenen/Etagen des Regals sind frei wählbar, wobei in den jeweiligen Ebenen/Etagen unterschiedliche Gärgrade erreichbar sind. Hierbei ist ein einfacher technischer Aufbau des Regals möglich, ohne ein Fließband oder eine Paternoster-Konstruktion. Die mit Teiglingen belegten, tablettförmigen Paletten werden in die jeweilige Ebene/Etage des Regals geschoben, wobei die jeweils neu eingeschobene Palette die bereits in der Ebene befindlichen Paletten weiterschiebt.

Eine besonders einfache Handhabung und Konstruktion ist auch dadurch gegeben, dass der Grad des Gärens der Tiefkühl-Teiglinge durch die Aufenthaltsdauer in der jeweiligen Ebene des Regals erfolgt. Dabei ist von Vorteil, dass mehr oder weniger Regalebenen genutzt werden, wobei die Regalebenen unterschiedliche Durchlaufzeiten aufweisen, um verschiedene Gärgrade zu erzeugen.

Vorzugsweise wird vorgeschlagen, dass die Regalebenen eine erste Teilstrecke mit niedriger Temperatur und eine darauffolgende zweite Teilstrecke mit höherer Temperatur aufweisen. Dies ermöglicht eine weitere Verbesserung des Gärverlaufs und des Gärergebnisses der Teiglinge.

Ausführungsbeispiele der Erfindung werden im Folgenden näher beschrieben.

Für die Herstellung von Tiefkühl-Teiglingen wird ein Teig aus Weizen- und/oder Roggenmehl, Wasser, Salz, Hefe und Backmitteln wie Emulgatoren und/oder Malz durch Mischen und Kneten erstellt. Der Teig wird lang gestreckt und es werden einzelne Teiglinge abgestochen. Nach einer Entspannphase werden die Teiglinge auf tablettförmige Paletten gelegt.

Die belegten Paletten werden in ein Lagerregal geschoben, das mehrere übereinander angeordnete, waagerechte Ebenen, bzw. Etagen aufweist. Beim Einschieben einer neuen belegten Palette in eine der Etagen werden die bereits in dieser Etage liegenden, belegten Paletten weitergeschoben, so dass ein zusätzlicher Antrieb innerhalb der Etagen bzw. Ebenen nicht erforderlich ist.

Der Grad des Gärens innerhalb der Ebenen wird bestimmt durch die Länge der Ebene, durch die Temperatur und den Luft-Feuchtigkeitsgrad innerhalb der jeweiligen Schrankebene und durch die Zeitdauer, innerhalb der eine Palette sich innerhalb einer Ebene aufhält.

Wird das Gären bei niedrigen Temperaturen durchgeführt, so liegen die Temperaturen bei 18 bis 30 Grad Celsius. Werden höhere Temperaturen für das Gären gewählt, so betragen diese 25 bis 40 Grad Celsius.

Die mit Teiglingen belegten Paletten durchlaufen die Schrankebenen z. B. mit 4 bis 8 Minuten je nach dem gewünschten Grad der Gare bei einer Luftfeuchtigkeit von 65 bis 90%. Hierbei kann die Regalebene eine erste Teilstrecke mit niedriger Temperatur und eine darauffolgende zweite Teilstrecke mit höherer Temperatur aufweisen.

## Patentansprüche

1. Verwendung eines Regals zum Lagern von Backwaren mit übereinander angeordneten Regalebenen, **dadurch gekennzeichnet, dass** die Backwaren Tiefkühl-Teiglinge sind und dass tablettförmige Paletten verwendet werden, auf denen die Teiglinge liegen und die vor einer Tiefkühlung zum Gären in die Regalebenen eingeschoben werden, wobei die jeweils neu eingeschobene Palette die bereits in der Regalebene befindlichen Paletten weiterschiebt, wobei der Grad des Gärens der Tiefkühl-Teiglinge durch die Aufenthaltsdauer in der jeweiligen Ebene des Regals erfolgt, wobei die einzelnen Ebenen des Regals frei wählbar sind, und wobei in den jeweiligen Ebenen unterschiedliche Gärgrade erreichbar sind.

2. Verwendung eines Regals nach Anspruch 1, **dadurch gekennzeichnet, dass** die Regalebenen eine erste Teilstrecke mit niedriger Temperatur und eine darauffolgende zweite Teilstrecke mit höherer Temperatur aufweisen.

## Claims

1. Use of a shelf for storing baked goods with shelf levels arranged one above the other, **characterized in that** the baked goods are deep-frozen dough pieces and that tray-shaped pallets are used on which the dough pieces are placed and which are inserted into the shelf levels for fermentation before deep-freezing, wherein the respective newly inserted pallet pushes further the pallets already on the shelf level, wherein the degree of fermentation of the deep-frozen dough pieces is determined by the length of time they remain on the respective shelf level, wherein the individual shelf levels can be freely selected, and wherein different degrees of fermentation can be achieved on the respective levels.

2. Use of a shelf according to claim 1, **characterized in that** the shelf levels have a first section with a low temperature and a subsequent second section with a higher temperature.

## Revendications

1. Utilisation d'un rayonnage pour le stockage de produits de boulangerie avec des niveaux du rayonnage superposés, **caractérisé en ce que** les produits de boulangerie sont des pâtons surgelés et que l'on utilise des palettes en forme de plateau sur lesquelles les pâtons sont posés et qui sont introduites dans les niveaux du rayonnage avant une surgélation pour la fermentation, dans lequel la correspondante nouvelle palette insérée repousse les palettes déjà présentes sur le niveau du rayonnage, le degré de fermentation des pâtons surgelés dépendant de la durée de séjour sur le niveau correspondant du rayonnage, les différents niveaux du rayonnage pouvant être choisis librement et différents degrés de fermentation pouvant être atteints sur les différents niveaux.

2. Utilisation d'un rayonnage selon la revendication 1, **caractérisée en ce que** les niveaux du rayonnage comportent une première section à basse température et une deuxième section à température plus élevée.
